# EUROPEAN PATENT APPLICATION

(11) **EP 4 155 174 A1**
(43) Date of publication of application: **29.03.2023**
(21) Application number: 21848139.8
(22) Date of filing: 22.07.2021
(51) Int. Cl.: B62H 1/12

(54) **WHEEL WITH ANTI-GYROSCOPIC EFFECT**

(71) Applicant: Novoa Sarriá, Marcos, 32001 Orense (ES)
(72) Inventor: Novoa Sarriá, Marcos, 32001 Orense (ES)
(74) Representative: Espiell Gomez, Ignacio
(86) International application number: PCT/ES2021/070554
(87) International publication number: WO 2022/023607

(57) **Abstract**

Disclosed is a wheel with anti-gyroscopic effect, which can be incorporated into a two wheel vehicle, such as a motorbike or bike, as either a front or rear wheel, which comprises: a main wheel (2), fastened at the centre to a rotation shaft (3); at least one second wheel (4), which has a diameter (d) smaller than the diameter (D) of the first main wheel (2) and is incorporated on the same rotation shaft (3); and a drive control mechanism (5), preferably an electric motor, which enables and controls the rotary movement of the second wheel (4) in the direction opposite to the direction of rotation of the first main wheel (2), regulating the gyroscopic effect produced by the first main wheel (2), wherein the speed of the second wheel (4) is independent of the speed of the first main wheel (2) and can be regulated as necessary by means of the mechanism (5).

## Description

### OBJECT OF THE INVENTION

The invention, as stated in the title of this specification, refers to an anti-gyroscopic effect wheel, that contributes, to the function to which it is designed, with advantages and characteristics that are disclosed in detail thereafter that means an improvement to the current state-of-the-art.

More concretely, the object of this invention is focused in a second wheel independent from a first main wheel of the vehicle, such as a car, a bicycle, having a smaller diameter, that rotates about the turn axle of the first main wheel and through a hand or automatic driving mechanism, namely a motor, the second wheel can be rotated in the direction opposite to the main wheel rotation thus eliminating the gyro effect of the said first main wheel.

Eliminating the gyro effect allows, for example, to reduce the vehicle braking distance, as it significantly improves the entering in a bend and, therefore, it reduces the braking distance.

### FIELD OF APPLICATION OF THE INVENTION

The field of application of this invention is within the sector of the industry engaged in manufacturing vehicles having two or more wheels, namely cars, motorcycles and bicycles, in particular focusing in the manufacture of wheels for the said vehicles.

### BACKGROUND OF THE INVENTION

As it is known, the gyro effect occurs because a rotating wheel tends to remain rotating about its axle, making that, in the bicycles or motorcycles, the vehicle remains straight and keeps its balance from the moment when it reaches a given speed.

However, although the gyro effect of a wheel is very beneficial when a motorcycle or bicycle circulates in a straight line, at the moment of entering a bend, this gyro effect can pass to be counter-productive because we have to overcome it by means of other forces, normally by tilting the body in order that the wheels lie down towards the ground.

The objective of this invention is, therefore, to provide a means to reduce or eliminate the said effect in certain moments in which it could be interesting for driving, for example to facilitate entering in a bend.

On the other hand, and as a reference to the current state-of-the-art, it shall be stated that, at least, by the document WO 2004026649 A1, a device is known similar to the object of this invention. Concretely, the said document refers to an apparatus to improve the performance of a vehicle, such as a motorcycle, that contemplates a steering wheel turning in the direction opposite to the direction of a wheel rotation of a vehicle associated to it. The steering wheel produces a gyro force that overcomes the gyro force produced by the rotating wheel and thus reduces or annuls the wheel gyro force, which can assist to carry out changes in the tilt of the vehicle and, therefore, in the bends. However, unlike this invention, in the said apparatus, the steering wheel is a vehicle disc brake that is driven by a set of planetary gears that does not allow an accurate control of the anti-gyro effect value, which can result necessary or interesting in depending which situation, these technical advantages being the one provided by the object of this invention.

### EXPLANATION OF THE INVENTION

The anti-gyro effect wheel that the invention proposes allows to satisfactorily reach the above-mentioned objectives, the characterizing details making it possible and that distinguish it conveniently appearing in the final claims attached to this description.

What the invention proposes, as it was said before, is a wheel of a vehicle, such as a car, a bicycle or a motorcycle that incorporates a second wheel, additional to the first main wheel, having a smaller diameter, that rotates about the axle of the main wheel and through a hand or automatic driving mechanism , for example an electric motor, the second wheel can be rotated in the direction opposite to that of the main wheel travel regulating thus the gyro effect of the said first main wheel in a regulated manner as it is convenient.

Concretely, the incorporation of the said second wheel having a smaller diameter provokes, when it is rotated in the direction opposite to the travel direction of the first main wheel, that the said first main wheel does not stand straight even though it is rotating at a speed sufficient to be sustained in normal conditions, as the gyro effect has been eliminated and when the second wheel is not rotated in the direction opposite to that of the first main wheel, the said first main wheel keeps standing straight in a conventional manner thanks to the gyro effect.

The gyro effect of a wheel is very beneficial when a two-wheeled vehicle such as a motorcycle or a bicycle is traveling in a straight line but at the moment of entering in a bend, this gyro effect can become counter-productive because it has to be overcome by means of other forces in order that the wheels tilt towards the floor to follow the path of the bend.

It shall be emphasized that the second wheel rotates about the turn axle of the first main wheel by means, for example of an electric motor, that can be hand or automatically driven that, also installed at the axle of the wheel will start, allowing to regulate its operation and speed as it is convenient to decide in which value the anti- gyro effect has to be applied.

In a preferred embodiment, when the vehicle starts braking, the second wheel will start rotating in the direction opposite to the travel of the first wheel and as it was provided thanks to the motor. On the contrary, when traveling in straight line, the second wheel can remain still or rotating in the direction of the travel of the first main wheel.

With the second wheel of the invention, the gyro effect can be fully or partly reduced at the moment of entering in the bend, thus reducing also the braking distance of the said car, motorcycle or bicycle in which it is incorporated.

In a preferred embodiment, the second wheel is incorporated laterally to the first main wheel. The mechanism of the electric motor that rotates the second wheel, preferably is incorporated coupled to the turn axle, at an end thereof, between the first main wheel and the second wheel.

In an even more preferred embodiment, two second wheels are incorporated, laterally situated, one on each side and at an equidistant distance from the first main wheel that rotate about the same turn axle by means at least of a driving control mechanism. Preferably, there exists two driving control mechanisms that allow to independently regulate the speed of each of the second wheels.

In an alternative embodiment, the second wheel is internally incorporated to the main wheel. Preferably, in this embodiment, the second wheel forms part of the wheel rim of the first main wheel, so that when the anti-gyro effect wheel is operated, the external part of the wheel rim fixed on the first main wheel rotates in one direction and the internal part of the wheel rim, that constitutes the second wheel, rotates in the opposite direction and so that when the anti-gyro effect wheel is not operated, the external part of the wheel rim fixed on the first wheel and the internal part of the wheel rim rotate in a single direction.

Between the external part of the wheel rim fixed on the first main wheel and the internal part of the wheel rim, that constitutes the second wheel, preferably there exists a rolling bearing so that when the anti-gyro effect wheel is not operated, that means the second wheel is not rotated in a direction opposite to the first main wheel, the external part of the wheel rim, fixed on the first wheel and the internal part of the wheel rim rotate in a single direction thanks to the friction between both parts of the wheel rim and the rolling bearing.

As it was mentioned above, the mechanism moving the second wheel at a regulable speed is an electric motor. The said electric motor, preferably is incorporated on the turn axle itself so that the cupper rotor and the magnet stator surround the said axle.

With the objective of allowing or not the independent rotation of the second wheel with respect to the first wheel, preferably it includes a coupling element that allows or precludes the independent rotation of the second wheel with respect to the first main wheel, such as a mechanic element or a magnetic element.

The mechanism of the electric motor that controls the speed of the second wheel can be hand driven by the user of the vehicle. Alternatively, the mechanism of the electric motor that controls the speed of the second wheel can be driven by a computer system based on technical conditions of the vehicle at each moment, such as the vehicle braking, tilt and speed.

For example, in the case of entering in a bend and not to whish having a gyro effect, the computer system programmed for it, will have the second wheel moving at a speed such to overcome the gyro effect generated by the first main wheel fully or partly.

### DESCRIPTION OF THE DRAWINGS

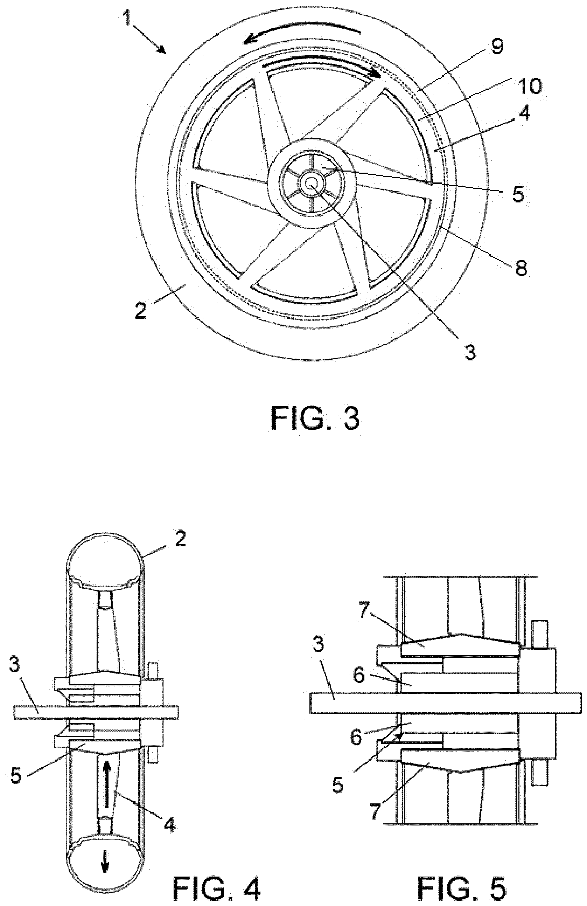

To complement the description that is being done and in order to assist to best understanding the characteristics of the invention, attached to this specification, as an integral part thereof, there is a set of drawings in which, for illustration and non-limiting purpose, the following has been represented:
The figure number 1. It shows an elevation view of a first example of the anti-gyro effect wheel object of the invention, concretely an example with a single lateral second wheel, the main parts and elements it comprises can be seen, namely the said second wheel having a smaller diameter, having been represented, by means of arrows, the direction of rotation of the said second wheel opposite to that of the first main wheel;

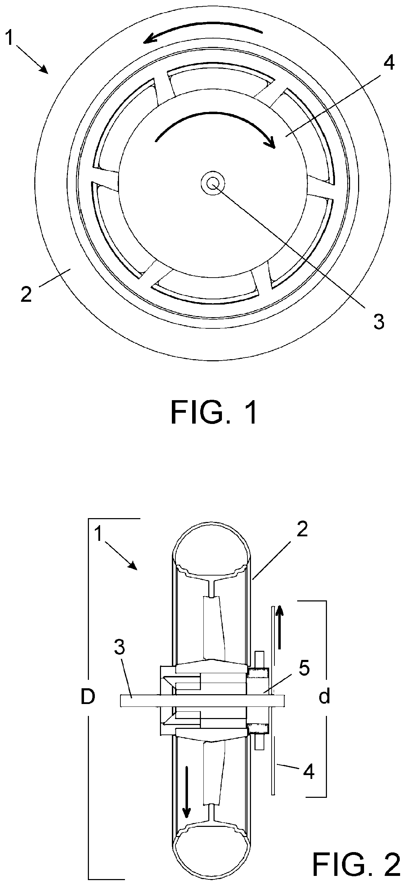

the figure 2.- It shows a section view of the example of the anti-gyro effect wheel shown in the figure 1, the arrangement of the motor regulating the second wheel driving can be seen;
the figure number 3.- It shows an elevation view of another example of the anti-gyro effect wheel object of the invention, in this case an example with a single second wheel, internal to the first main wheel as a wheel rim;
the figure number 4.- It shows a section view of the example of the wheel shown in the figure 3, the central arrangement of the second wheel and of the motor controlling its driving can be seen;
the figure number 5.- It shows an enlarged view of the central area of the figure 4, showing with more details the arrangement of the motor and of its parts; and
the figures numbers 6 and 7.- They show both views, in elevation and in section, respectively, of another example of the ant-gyro effect wheel according to the invention, in this case an example with two second lateral wheels, one on each side of the first main wheel, the central arrangement of the motor controlling the driving can be seen.

### PREFERRED EMBODIMENT OF THE INVENTION

Seen the mentioned figures and according to the numerals adopted, an example of non-limiting embodiment of the anti-gyro wheel of the invention, which comprises what is described in detail below.

Thus, as it is seen in the figure 1, the said wheel (1), applicable for its incorporation in a vehicle, such as a car, a motorcycle or a bicycle, either as a front wheel or as a rear wheel, essentially comprises:
- a first main wheel (2), that rotates about a turn axle (3),
- at least, a second wheel (4) having a diameter (d) smaller than the diameter (D) of the main wheel (2), that rotates about the same turn axle (3), and
- a mechanism (5) of driving control that makes possible and controls the turning movement of the second wheel (4) in the direction opposite to the turning direction of the first main wheel (2) in an independent manner from the speed of the first wheel (2) so that it regulates the gyro effect produced by the first main wheel (2).

Seen the figures 1 and 2, it can be seen how, in an embodiment, the anti-gyro effect wheel (1) includes a single second wheel (4) laterally incorporated on the first main wheel, (2), in which case the electric motor that constitutes the driving mechanism (5) is incorporated coupled to the turn axle (3), at an end thereof, between the first main wheel (2) and the second wheel (4).

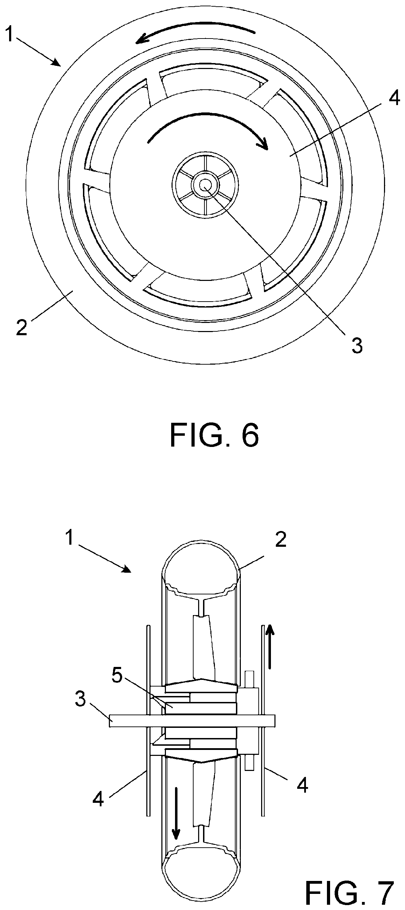

Seen the figures 6 and 7, it can be seen how, in another embodiment of the wheel (1) of the invention, the first main wheel (2) incorporates two second wheels (4) located laterally, one at each side and at a distance equidistant from the first main wheel (2) that rotates about the same turn axle (3) by means of at least a mechanism (5) of drive control. Optionally, the existence of two operating control mechanisms (5) is provided that allow to regulate the speed of each of the second wheels (4) in an independent manner allowing to decide driving one of the said second wheels (4), that of the other or that of both at the same time.

Seen the figures 3 to 5, it is observed that, in another embodiment, the anti-gyro effect wheel (1) includes a single second wheel (4) internally incorporated on the main wheel (2). Preferably, the second wheel (4) forms part of the wheel rim of the first main wheel (2), so that when the anti-gyro effect wheel is operated, the external part of the wheel rim (9) fixed on the first main wheel (2) rotates in a direction and the internal part of the wheel rim (10) that constitutes the second wheel (4) rotates in the opposite direction and so that when the anti-gyro effect wheel is not operated, the external part of the wheel rim (9) fixed on the first wheel (2) and the internal part of the wheel rim (10) rotate in a single direction.

Between the external part of the wheel rim fixed on the first main wheel (2) and the internal part of the wheel rim, that constitutes the second wheel (4), preferably there exists a rolling bearing (8) so that when the anti-gyro effect wheel is not operated, that means when the second wheel (4) is not rotated in the direction opposite to the first main wheel (2), the external part of the wheel rim, fixed to the first wheel (2) and the internal part of the wheel rim rotates in a single direction thanks to the friction between both parts of the wheel rim and the rolling bearing.

In this case, the mechanism (5) of the motor, preferably, is arranged incorporated at the center of the turn axle (3).

Last, it shall be emphasized that, preferably, in the anti-gyro effect wheel (1) disclosed the existence of an element (not represented) is contemplated that allows or precludes the independent rotation the second wheel (4) with respect to the first main wheel (2), which, for example, is constituted by a coupling element that mechanically or magnetically links both wheels to each other in order that they rotate jointly in the same direction.

Optionally, the mechanism (5) that controls the turning movement of the second wheel (4) in a direction opposite to the turning direction of the first main wheel (2) is linked to the braking system of the vehicle that incorporates the anti-gyro effect of the wheel (1) in order it is driven when braking the vehicle.

Preferably, the said mechanism (5) that moves the second wheel (4) at a regulable speed is an electric motor that is incorporated in the turn axle (3) itself, as it can be seen in the figures 2, 4, 5 and 7, so that the cupper rotor (6) and the magnet stator (7) surround the said axle, either at its center or on a lateral thereof. In the figure 5 such arrangement can be seen in more details.

Sufficiently described the nature of this invention, as well as the manner of implementing it, it is not deemed necessary to extend any longer its explanation in order that a person skilled in the art understands its extent and the advantages arising from it.

## Claims

1. - WHEEL WITH ANTI-GYROSCOPIC EFFECT that, applicable for its incorporation in a vehicle, such as car, a motorcycle or a bicycle, either as a front wheel or as a rear wheel, comprises:
- a first main wheel (2), that rotates about a turn axle (3),
- at least, a second wheel (4) having a diameter (d) smaller than the diameter (D) of the main wheel (2), that rotates about the same turn axle (3), and
- a mechanism (5) of driving control that makes possible and controls the turning movement of the second wheel (4) in the direction opposite to the turning direction of the first main wheel (2) so that it regulates the gyro effect produced by the first main wheel (2),
**characterized in that** the speed of the second wheel (4) is independent from the speed of the main first wheel (2) and can be regulated as convenient by means of the said mechanism (5).

2. - WHEEL WITH ANTI-GYROSCOPIC EFFECT according to the preceding claim, **characterized in that** it includes a single second wheel (4) laterally incorporated to the first main wheel (2)

3. - WHEEL WITH ANTI-GYROSCOPIC EFFECT according to the claim 1 or 2, **characterized in that** the mechanism (5) of the electric motor is incorporated coupled to the run axle (3) at an end thereof, between the first main wheel (2) and the second wheel (4).

4. - WHEEL WITH ANTI-GYROSCOPIC EFFECT according to any of the claims 1 (sic), **characterized in that** it incorporates two second wheels (4) located laterally, one at each side and at an equidistant distance from the first main wheel (2) that rotates about the same turn axle (3) by means at least of a driving control mechanism (5).

5. - WHEEL WITH ANTI-GYROSCOPIC EFFECT according to claim 4, **characterized in that** it comprises two driving control mechanisms (5) that allow to regulate the speed of each of the second wheels (4) in an independent manner.

6. - WHEEL WITH ANTI-GYROSCOPIC EFFECT according to the claim 1, **characterized in that** it includes a single second wheel (4) internally incorporated to the main wheel (2).

7. - WHEEL WITH ANTI-GYROSCOPIC EFFECT according to claim 6, **characterized in that** the second wheel (4) forms part of the wheel rim of the first main wheel (2), so that when the anti-gyro effect wheel is operated, the external part of the wheel rim (9) fixed on the first main wheel (2) rotates in one direction and the internal part of the wheel rim (10), that constitutes the second wheel (4), rotates in the opposite direction and so that when the anti-gyro effect wheel is not operated, the external part of the wheel rim (9) fixed on the first wheel (2) and the internal part of the wheel rim (10) rotate in a single direction.

8. - WHEEL WITH ANTI-GYROSCOPIC EFFECT according to the claim 7, **characterized in that**, between the external part of the wheel rim fixed on the first main wheel (2) and the internal part of the wheel rim, that constitutes the second wheel (4), there exists a rolling bearing (8) so that when the anti-gyro effect wheel is not operated, that means when the second wheel (4) is not rotated in the direction opposite to the first main wheel (2), the external part of the wheel rim, fixed to the first wheel (2) and the internal part of the wheel rim rotates in a single direction thanks to the friction between both parts of the wheel rim and the rolling bearing.

9. - WHEEL WITH ANTI-GYROSCOPIC EFFECT according to the claim 1, **characterized in that**, the mechanism (5) moving the second wheel (4) at a regulable speed is an electric motor.

10. - WHEEL WITH ANTI-GYROSCOPIC EFFECT according to the preceding claim 9, **characterized in that**, the mechanism (5) of the electric motor is incorporated on the turn axle itself (3) so that the cupper rotor (6) and the magnet stator (7) surround the said axle.

11. - WHEEL WITH ANTI-GYROSCOPIC EFFECT according any of the preceding claims, **characterized in that**, it includes a coupling element that allows or precludes the independent rotation of the second wheel (4) with respect to the first main wheel (2).

12. - WHEEL WITH ANTI-GYROSCOPIC EFFECT according any of the preceding claims, **characterized in that** the mechanism (5) of the electric motor that controls the speed of the second wheel (4) is hand operated by the user of the vehicle.

13. WHEEL WITH ANTI-GYROSCOPIC EFFECT according any of the claims 1-11, **characterized in that** the mechanism (5) of the electric motor that controls the speed of the second wheel (4) is driven by a computer system based on technical conditions of the vehicle at each moment, such as the vehicle braking, tilt and speed.
